# EUROPEAN PATENT APPLICATION

(11) **EP 2 357 597 A1**
(43) Date of publication of application: **17.08.2011**
(21) Application number: 10152168.0
(22) Date of filing: 29.01.2010
(51) Int. Cl.: G06Q 20/00

(54) **Method and system for carrying out electronic payment transactions**

(71) Applicant: El-Murr, Assaf Gerges, Metn (LB); Bou-Harb, Pierre Ibrahim, Metn (LB)
(72) Inventor: El-Murr, Assaf Gerges, Metn (LB); Bou-Harb, Pierre Ibrahim, Metn (LB)
(74) Representative: Viering, Jentschura & Partner

(57) **Abstract**

A method for carrying out electronic payment transactions comprises: transmitting a payment transaction request to an operator, the payment request comprising instructions to transfer an amount of money from a first bank account in a first bank to a second bank account in a second bank; transmitting a first payment request from the operator to the first bank instructing the first bank to transfer money from the first bank account to a first operator bank account in the first bank; and transmitting a second payment request from the operator to the second bank instructing the second bank to transfer money from a second operator bank account in the second bank to the second bank account.

## Description

### Technical Field

The present invention relates generally to a method for carrying out electronic payment transactions, and a system for electronic payment transactions.

### Background

Payment systems have developed gradually and significantly over the century and decades. Initially, simple barter, exchange of goods or services, was the main form of commerce. Cultures ultimately learned the profits of generalizing traffic, by forming units of money that could be exchanged freely for all types of goods and services. Money permitted for a "disconnect" between the needs of the vendor and the needs of the vendee, in that the vendee (now a payer) could obtain tools or other goods even if the vendee did not have any products or services that the vendor (now the payee) wanted. The development of money thus removed substantial friction from commerce, and allowed more immediate and flexible trade between people.

Later, various advanced trading systems expanded. For example, paper checks have been commonly used as a way of payment. While checks provide security for the buyer, whereas, they are harder for thieves to use than is cash, they are also more complicated in many ways. For example, the user must carry the checks with him or her. Also, the checks themselves are not guaranteed, whereas the presence of the provision could be risky. As a result, vendors may use manual (e.g., checking ID) to verify the leGTIimacy of a check, or may institute severe penalties for "bounced" checks so as to discourage illicit use of checks and/or recoup costs incurred from bad checks. Because of these limits, many vendors do not take checks. Also, checks cost money to process and time to fill out, so they are not particularly practical for small-value transactions.

With the development of telecommunication infrastructure, new payment system have been introduced, most essentially the use of electronic cards.

Indeed, credit and debit card are other popular and well-known payment systems. However, they typically require the purchase by a vendor of specialized equipment, and the provision of a communication channel to the card issuer. In addition, credit and debit card companies often charge relatively large transaction fees. As a result, the use of credit or debit cards for low-value transactions, for small vendors, or in locations where access to card-processing technology is unavailable, is not wholly satisfactory.

Other electronic payment systems permit simplified payment to a single vendor. For example, certain organizations permit their customers to register with a ill-paying system. Some of these systems, like common toll road systems, may initially receive payment information, such as a credit card number, from a user, and then may allow the user to dial in or otherwise communicate with the system to pay their bills or put money into their account; other managers of some geographical locations have introduced near field communication systems through which they have also offered certain payment facilities for their clients, all payments being routed subsequently through traditional channels. More recently, mobile phone operators have introduced to consumers the possibility to use their mobile unit credits in lieu of cash to make purchases in member outlets, the member outlet will then have to reconvert the credit assigned to him from the consumer into real cash.

It is desirable to provide payment systems which are transparent, easy to use and fast.

### Summary of the Invention

According to an embodiment of the present invention, a method for electronic payment transactions is provided, comprising: transmitting a payment transaction request to an operator, the payment request comprising instructions to transfer an amount of money from a first bank account in a first bank to a second bank account in a second bank; transmitting a first payment request from the operator to the first bank instructing the first bank to transfer money from the first bank account to a first operator bank account in the first bank; and transmitting a second payment request from the operator to the second bank instructing the second bank to transfer money from a second operator bank account in the second bank to the second bank account.

One effect of this embodiment is that, in order to carry out a money transaction, only money transactions between different bank accounts within the same bank have to be carried out, i.e. it is not necessary to directly transfer money between two bank accounts which are respectively located in different banks. That is, the direct transfer of money between two bank accounts which are respectively located in different banks is replaced by bank internal transfers between sender/recipient bank accounts and operator bank accounts. Thus, the money transaction can be carried out very fast.

According to an embodiment of the present invention, the method further comprises: transmitting a first confirmation request from the operator to the first bank, the first confirmation request requesting the first bank for confirmation that it is possible to debit the first bank account with the amount of money according to the payment request, and transmitting a first confirmation message from the first bank to the operator if the first confirmation request can be met, wherein the operator only transmits the first payment request and the second payment request if the operator receives the first confirmation message.

According to an embodiment of the present invention, the method further comprises: transmitting a second confirmation request from the operator to the second bank, the second confirmation request requesting the second bank for confirmation that it is possible to credit the second bank account with the amount of money according to the payment request; and transmitting a second confirmation message from the second bank to the operator if the second confirmation request can be met, wherein the operator only transmits the first payment request and the second payment request if the operator receives the second confirmation message.

According to an embodiment of the present invention, the operator is located outside the first bank and the second bank.

According to an embodiment of the present invention, all transmission steps are carried out in real time.

According to an embodiment of the present invention, the first payment request and the second payment request are transmitted to the first bank and the second bank simultaneously.

According to an embodiment of the present invention, the method further comprises transmitting a payment completion message from the operator to an owner of the first bank account once the payment according to the payment request has been successfully completed.

According to an embodiment of the present invention, the method further comprises transmitting a payment completion message from the operator to an owner of the second bank account once the payment according to the payment request has been successfully completed.

According to an embodiment of the present invention, before transmitting the payment transaction request to the operator, a first unique identification number is generated and assigned to the owner of the first bank account and the first bank account, and a second unique identification number is generated and assigned to the owner of the second bank account and the second bank account.

According to an embodiment of the present invention, the payment transaction request includes the first unique identification number and the second unique identification number, wherein the first confirmation request as well as the first payment request includes the first unique identification number, and wherein the second confirmation request as well as the second payment request includes the second unique identification number.

According to an embodiment of the present invention, before transmitting the payment transaction request to the operator, a first unique identification number is generated, wherein a first plurality of bank accounts as well as an owner of the first plurality of bank accounts including the first bank account are assigned to the first bank account and the first bank account, and a second unique identification number is generated and assigned to the first unique identification number, and wherein before transmitting the payment transaction request to the operator, a second unique identification number is generated, wherein a second plurality of bank accounts including the second bank account as well as an owner of the second plurality of bank accounts are assigned to the second unique identification number.

According to an embodiment of the present invention, the first bank account is selected according to a first priority list from the first plurality of bank accounts, and wherein the second bank account is selected according to a second priority list from the second plurality of bank accounts.

According to an embodiment of the present invention, the first bank account is replaced by at least one bank account from the first plurality of bank accounts according to the first priority list if the payment transaction cannot be completed using the first bank account, and wherein the second bank account is replaced by at least one bank account from the second plurality of bank accounts according to the second priority list if the payment transaction cannot be completed using the second bank account.

According to an embodiment of the present invention, the assignment process is carried out on a random basis.

According to an embodiment of the present invention, each identification number respectively comprises information about the bank in which the corresponding bank account is located, and information about the owner of this bank account.

According to an embodiment of the present invention, each transmitting step between the operator and the banks may include both the GTI of the sender and the GTI of the recipient.

According to an embodiment of the present invention, a system for electronic payment transactions is provided, comprising: a first communication device; an operator device being connected to the first communication device via a first communication network; a second communication device being located within a first bank and being connected to the operator via a second network; and a third communication device being located within a second bank and being connected to the operator via a third network, wherein the first communication device is configured to transmit a payment request to the operator, the payment request comprising instructions to transfer an amount of money from a first bank account in the first bank to a second bank account in the second bank, wherein the operator is configured to a) transmit a first payment request from the operator to the second communication device instructing the first bank to transfer money from the first bank account to a first operator bank account in the first bank, and b) transmit a second payment request from the operator to the third communication device instructing the second bank to transfer money from a second operator bank account in the second bank to the second bank account.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a schematical drawing of a process flow of a method according to one embodiment of the present invention;
FIG. 2 shows a schematical drawing of a process flow of a method according to one embodiment of the present invention;
FIG. 3 shows a schematical drawing of a process flow of a method according to one embodiment of the present invention;
FIG. 4 shows a schematical drawing of a possible format of a Global Transfer Identification according to one embodiment of the present invention; and

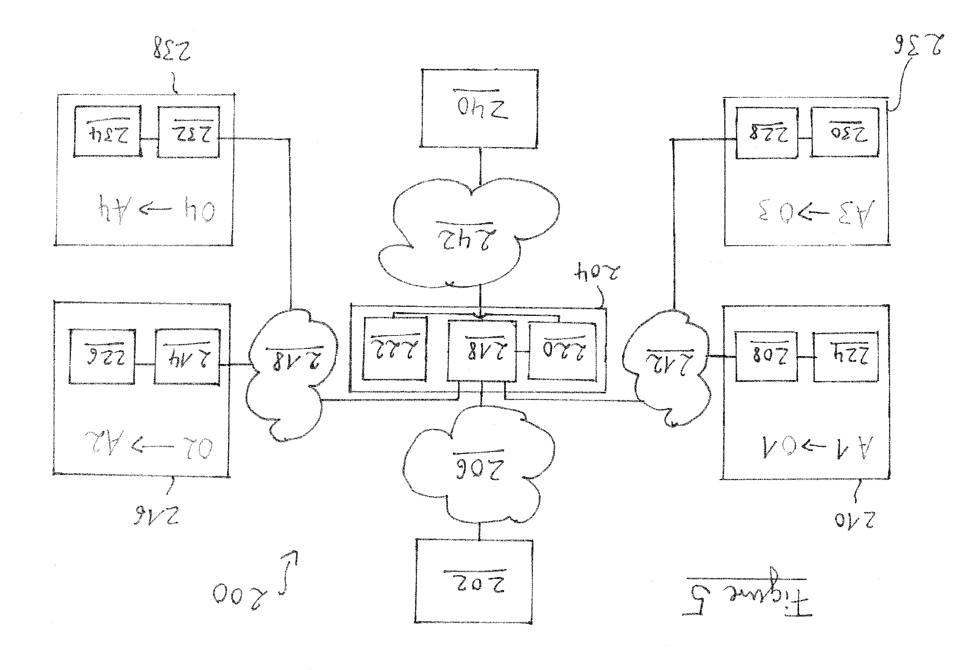

FIG. 5 shows a schematical drawing of a system according to one embodiment of the present invention.

### Description

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, logical, and electrical changes may be made without departing from the scope of the invention. The various embodiments are not necessarily mutually exclusive, as some embodiments can be combined with one or more other embodiments to form new embodiments. The following detailed description therefore, is not to be taken in a limiting sense, and the scope of the present invention is defined by the appended claims.

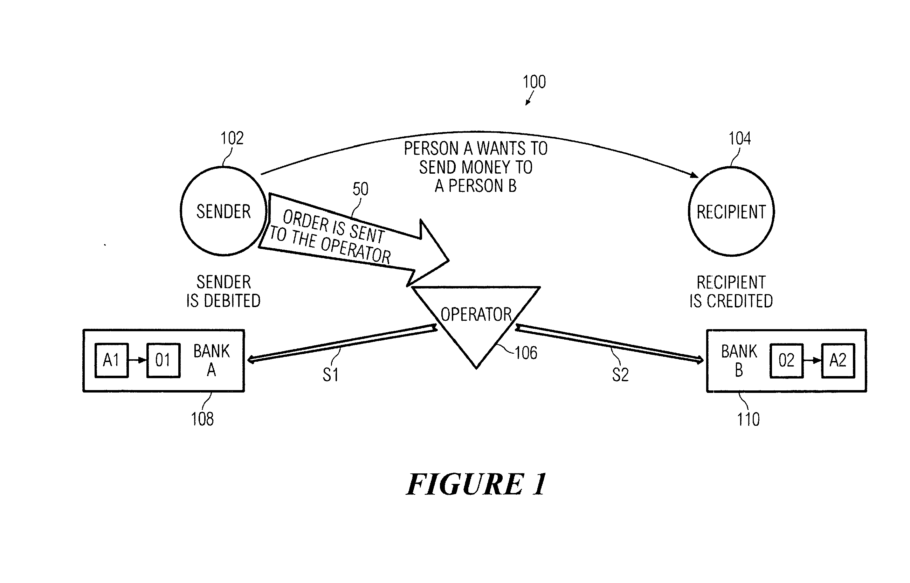

Figure 1 shows a method 100 for electronic payment transactions according to an embodiment of the present invention. The scenario underlying this process flow is that a sender 102 wants to send money to a recipient 104. In order to do this, the sender 102 sends a payment transaction request (step S0) to an operator 106, the payment transaction request comprising instructions to transfer an amount of money from a first bank account A 1 in a first bank 108 to a second bank account A2 in a second bank 110. Then, a first payment request (Step S1) is transmitted from the operator 106 to the first bank 108 instructing the first bank 108 to transfer money from the first bank account A1 to a first operator bank account O1 in the first bank. Then, a second payment request (Step S2) is transmitted from the operator 106 to the second bank 110 instructing the second bank 110 to transfer money from a second operator bank account 02 in the second bank 110 to the second bank account A2.

One effect of this embodiment is that the transfer of money between bank accounts A1 and A2 (i.e. a transfer between different banks) can be replaced by bank internal transfers between bank accounts A1/A2 and operator bank accounts O1/02. Thus, the money transaction can be carried out very fast.

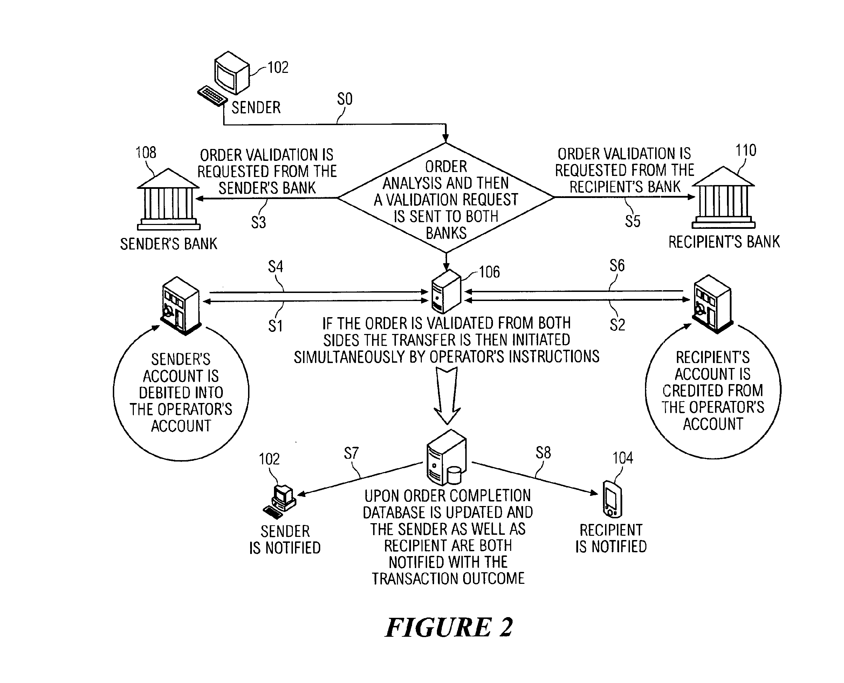

Before sending the first payment request (Step S1) from the operator 106 to the first bank 108, and before sending the second payment request (Step S2) from the operator 106 to the second bank 110, it may be advantageous to clarify whether enough money is available on bank account A 1 to carry out the transaction, and whether it is possible to credit this amount to bank account A2. Thus, according to an embodiment of the present invention, the following additional steps may be carried out, before carrying out steps S1 and S2 (see Figure 2): transmitting a first confirmation request (step S3) from the operator 106 to the first bank 108, the first confirmation request requesting the first bank 108 for confirmation that it is possible to debit the first bank account A1 with the amount of money according to the payment transaction request, and transmitting a first confirmation message (step S4) from the first bank 108 to the operator 106 if the first confirmation request can be met, wherein the operator 106 only transmits the first payment request (step S1) and the second payment request (step S2) if the operator 106 receives the first confirmation message (step S4).

Similarly, according to an embodiment of the present invention, the method further comprises: transmitting a second confirmation request (step S5) from the operator 106 to the second bank 110, the second confirmation request requesting the second bank 110 for confirmation that it is possible to credit the second bank account A2 with the amount of money according to the payment transaction request; and transmitting a second confirmation message (step S6) from the second bank 110 to the operator 106 if the second confirmation request can be met, wherein the operator 106 only transmits the first payment request (step S1) and the second payment request (step S2) if the operator 106 receives the second confirmation message (step S6).

According to an embodiment of the present invention, the operator 106 is located outside the first bank 108 and the second bank 110. However, it may also be possible to locate the operator 106 in one of the banks 108/110.

According to an embodiment of the present invention, all transmission steps S 1 to S6 are carried out in real time. This enables to perform the money transactions as a whole in real time.

According to an embodiment of the present invention, the first payment request (step S1) and the second payment request (step S2) are transmitted to the first bank 108 and the second bank 110 simultaneously.

According to an embodiment of the present invention, the method further comprises transmitting a payment completion message (step S7) from the operator 106 to an owner of the first bank account A (the sender 102) once the payment according to the payment transaction request has been successfully completed.

According to an embodiment of the present invention, the method further comprises transmitting a payment completion message (step S8) from the operator 106 to an owner of the second bank account A2 (the recipient 104) once the payment according to the payment transaction request has been successfully completed.

According to an embodiment of the present invention, before transmitting the payment transaction request to the operator (step S0) a first unique identification number (also referred to as Global Transfer Identification (GTI)) is generated and assigned to the owner of the first bank account A and to the first bank account A1 and a second unique identification number is generated and assigned to the owner of the second bank account A2 and to the second bank account A2. The assignment is preferably done automatically, and also the transmission of the thus generated respective GTI to the owner of the first bank account A1 and to the owner of the second bank account A2 may be done automatically, so that no one else apart from a corresponding GTI generating and assigning software and the bank account owners do know their GTIs.

According to an embodiment of the present invention, the payment transaction request (step S0 includes the first unique identification number and the second unique identification number, wherein the first confirmation request (S3) as well as the first payment request (S1) respectively includes the first unique identification number, and wherein the second confirmation request (S5) as well as the second payment request (S2) includes the second unique identification number. In this manner, the "source" and "destination" of the money to be transmitted can be fully identified. Further, it is possible in this way to assign concrete persons to the source (bank account) of money and to the destination (bank account) of money.

Up to now, only the case has been discussed where one person and one bank account have been respectively assigned to one GTI. However, there may also be the case that the sender characterized by a particular GTI holds a plurality of bank accounts. Similarly, the recipient characterized by a particular GTI may hold a plurality of bank accounts. For this scenario, according to an embodiment of the present invention, before transmitting the payment transaction request (step S0 to the operator, a first unique identification number is generated, wherein a first plurality of bank accounts including the first bank account as well as an owner (e.g. the sender) of the first plurality of bank accounts are assigned to the first unique identification number, and wherein, before transmitting the payment transaction request to the operator, a second unique identification number is generated, wherein a second plurality of bank accounts including the second bank account as well as an owner (e.g. the recipient) of the second plurality of bank accounts are assigned to the second unique identification number.

According to this embodiment, it is possible to assign more than one bank account to a GTI, i.e. it is possible to assign more than one bank account to a particular person which is associated with the GTI. This makes it possible to perform more complex money transactions. For example, according to an embodiment of the present invention, the first bank account is selected according to a first priority list from the first plurality of bank accounts, and the second bank account is selected according to a second priority list from the second plurality of bank accounts. That is, a priority ranking may be used among the bank accounts. For example, when transmitting a payment transaction request to an operator, the payment transaction request may comprise instructions to transfer an amount of money from a first bank account in a first bank to a second bank account in a second bank. Alternatively, the payment transaction request may comprise instructions to transfer an amount of money from a first plurality of bank accounts (the bank accounts may be located within a single bank or spread over several banks) to a second plurality of bank accounts (the bank accounts may be located within a single bank or spread over several banks). The first plurality of bank accounts may be ordered according to first priority information, and the second plurality of bank accounts may be ordered according to second priority information. For example, the first plurality of bank accounts may include bank accounts "A", "B" and "C". Bank account "A" may have a priority higher than bank account "B", and bank account "B" may have a priority higher than bank account "C". Assume that the owner of bank accounts "A", "B" and "C" likes to send 100 USD to a recipient. The operator may first try to debit this money from bank account "A". If, however, the bank account "A" can not be debited with 100 USD, then the operator may automatically try to debit this money from bank account "B". If even the bank account "A" can not be debited with 100 USD, then the operator may automatically try to debit this money from bank account "C". In other words, a first bank account (here bank account "A") may be replaced by at least one bank account from the first plurality of bank accounts according to the first priority information if the payment transaction cannot be completed using the first bank account. The sender may also specify within the money transaction request to debit 100 USD, wherein 40 USD are to be debited from the first priority bank account (here "A"), wherein 40 USD are to be debited from the second priority bank account (here "B"), and wherein the rest is to be debited from the third priority bank account (here "C"). Alternatively, it may be specified within the first priority information or within the money transaction request which percentage of the amount of money to be transferred is to be debited from which bank account.

In a similar manner, for example, the first plurality of bank accounts may include bank accounts "D", "E" and "F". Bank account "D" may have a priority higher than bank account "E", and bank account "E" may have a priority higher than bank account "F". Assume that the owner of bank accounts "D", "E" and "F" likes to receive 100 USD from a sender. The operator may first try to credit this money to bank account "D". If, however, the bank account "D" can not be credited with 100 USD, then the operator may automatically try to credit this money to bank account "E". If even the bank account "E" can not be credited with 100 USD, then the operator may automatically try to credit this money to bank account "F". In other words, a second bank account (here bank account "D") may be replaced by at least one bank account from the second plurality of bank accounts according to the second priority information if the payment transaction cannot be completed using the second bank account. The sender may also specify within the money transaction request to credit 100 USD, wherein 40 USD are to be credited to the first priority bank account (here "D"), wherein 40 USD are to be credited to the second priority bank account (here "E"), and wherein the rest is to be credited to the third priority bank account (here "F"). Alternatively, it may be specified within the second priority information or within the money transaction request which percentage of the amount of money to be transferred is to be credited to which of the bank accounts "D", "E", and "F".

The first priority information and the second priority information may be included within the money transaction request. Alternatively, the first priority information and the second priority information may be stored within the operator. In this case, there would be no need to include the first priority information and the second priority information into the payment transaction request.

According to an embodiment of the present invention, due to safety reasons, the GTI generation process/ GTI assignment process is carried out on a random basis.

According to an embodiment of the present invention, each identification number GTI respectively comprises information about the banks in which the corresponding bank accounts are located, and personal information about the owner of this bank account. The information of the banks may also be omitted.

According to an embodiment of the present invention, a system 200 for electronic payment transactions is provided, comprising: a first communication device 202; an operator device 204 being connected to the first communication device 202 via a first communication network 206; a second communication device 208 being located within a first bank 210 and being connected to the operator 204 via a second network 212; and a third communication device 214 being located within a second bank 216 and being connected to the operator 204 via a third network 218, wherein the first communication device 202 is configured to transmit a payment request to the operator 204, the payment request comprising instructions to transfer an amount of money from a first bank account A 1 in the first bank 210 to a second bank account A2 in the second bank 216, wherein the operator 204 is configured to a) transmit a first payment request from the operator 204 to the second communication device 208 instructing the first bank 210 to transfer money from the first bank account A 1 to a first operator bank account 01 in the first bank 210, and b) transmit a second payment request from the operator 204 to the third communication device 214 instructing the second bank 216 to transfer money from a second operator bank account 02 in the second bank 216 to the second bank account A2.

According to an embodiment of the present invention, the operator 204 comprises a fourth communication device 218 being connected to the first communication network 206, the second communication network 212, and the third communication network 218. The operator 204 may further comprise a first processing device 220 coupled to the fourth communication device 218, and a priority information memory 222 coupled to the a first processing device 220. The fourth communication device 218 is configured to communicate with the first communication device 202, the second communication device 208 and the third communication device 214. The first processing device 220 is configured to contol the fourth communication device 218 according to the priority information stored within the priority information memory 222. The first bank 210 may comprise a second processing device 224 coupled to the second communication device 208 and being configured to control the second communication device 208 and the transfer of money from bank account A1 to operator bank account O1. The second bank 216 may comprise a third processing device 226 coupled to the third communication device 214 and being configured to control the third communication device 214 and the transfer of money from operator bank account 02 to bank account A2.

A third bank 236 may be coupled to the operator 204 via the second network 212. The third bank 236 may comprise a fifth communication device 228 and a fourth processing device 230 connected to the fifth communication device 228. The fourth processing device 230 is configured to control the fifth communication device 208 and the transfer of money from bank account A3 to operator bank account 03. A fourth bank 238 may be coupled to the operator 204 via the third network 218. The third bank 236 may comprise a sixth communication device 232 and a fifth processing device 234 connected to the sixth communication device 232. The fifth processing device 234 is configured to control the sixth communication device 232 and the transfer of money from operator bank account 04 to bank account A4.

In case that priority information is stored within the priority information memory 222, the operator may take into account this information when receiving a request from the first communication device 202 (sender) to transfer money from the owner of bank accounts A1 and A3 to the owner of bank accounts A2 and A4. To do this, the priority information may for example indicate that bank account A3 should only be debited if bank account A1 can not be debited. In a similar manner, the priority information may for example indicate that bank account A4 should only be credited if bank account A2 can not be credited. The first priority information concerning bank accounts A 1 and A3 may be sent by the first communication device 202 (sender) to the operator 204 (e.g. together with each money transaction request, or only once) in order to be stored in the priority information memory 222. The first priority information may also be prestored within the priority information memory 222. The second priority information concerning bank accounts A2 and A4 may be sent by a seventh communication device 240 (recipient) via a fourth communication network 242 to the operator 204 in order to be stored in the priority information memory 222. The second priority information may also be prestored within the priority information memory 222.

Within each money transaction request, the communication device 202 sends the GTI of the sender and the GTI of the recipient to the operator. From this GTI, the both sender and recipient can be uniquely identified by the operator 204. Based on further information accessible for the operator 204 (e.g. from information prestored within the operator 204 at the time when the GTIs are generated and assigned), the operator knows which bank accounts correspond to the GTI of the sender, and which bank accounts correspond to the GTI of the recipient. Then, taking into account the priority information, all information is available to carry out the money transactions.

In the following description, further aspects of the present invention will be described.

A user having subscribed to the service stemming from embodiments of the invention can purchase a product or service and most importantly make the payment immediately to a recipient without having any cash payment involved. Embodiments of the invention simulate multiple cash transactions from the moment where the sender introduces his global transfer identification (GTI) to trigger a transaction up until the recipient introduces his own GTI to accept the cash payment.

This process which may occur at real time will trigger the following processes: a) The sender initiates the payment request and introduces the GTI; b) The request reaches a dedicated server (operator) which will automatically contact the sender's bank to ensure the funds availability; c) The dedicated server shall notify the recipient that a payment request has been made and that funds are available to complete the transaction.

If the recipient introduces the GTI, the transaction shall be contemplated in the following manner: a) The dedicated server shall instruct each bank to make internal transfers by operations of debit credit to a dedicated account; b) The banks conforming the transaction will notify the dedicated server which internally will operate in a systematic set of within those dedicated accounts and inform the bank of the balances. All this processing may be carried out in real time.

According to an embodiment of the present invention Figure 1 may be interpreted as follows: The sender is trigging a payment, to the recipient. The transfer order is sent through the operator's network to the sender's bank. The sender's bank checks the sender's account balance and sends a real time notification to the operator; the operator will subsequently trigger a real time notification to the recipient informing him that there is an incoming a real time money transfer request awaiting his approval. It the recipient is approving the transaction, the operator will simultaneously issue to both banks instructions to make payments.

According to an embodiment of the present invention Figure 2 may be interpreted as follows: The operator's main role is to (i) receive the request from the sender and to send validation request to the sender's bank, (ii) process the received data and validation and trigger chains of payments between the bank of the sender and the bank of the receiver, (iii) process internal real time transaction between the sender's bank and the receiver's bank, then a database update, and close the network for the relevant transaction. The database update may include an update of an operator database within the operator, an update of a recipient's bank database within the recipient's bank, and an update of a sender's bank database within the sender's bank. The update of the operator database may be handled by the operator, whereas the update of the recipient's bank / sender's bank databases may be handled by the respective banks in which the databases are located.

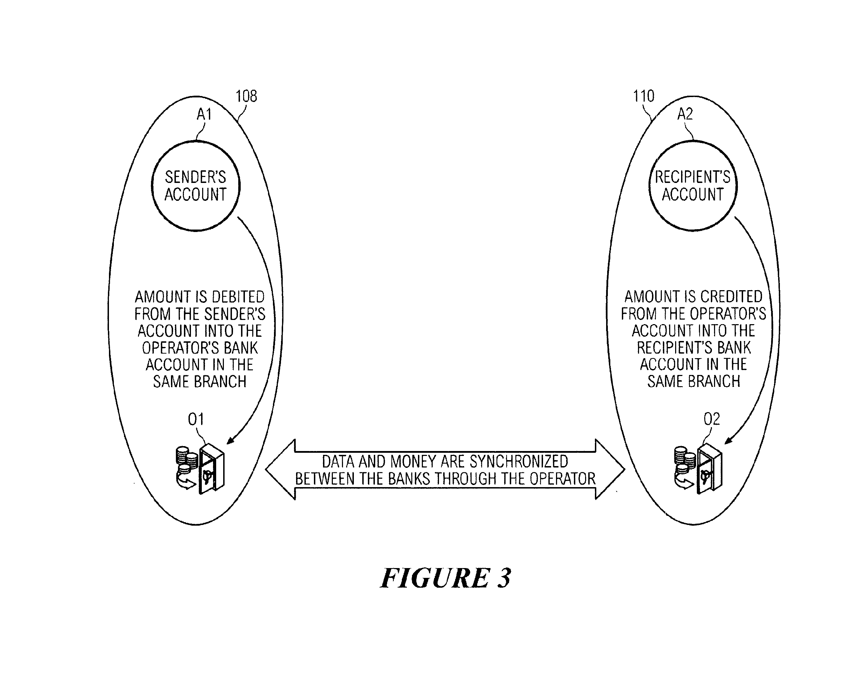

According to an embodiment of the present invention Figure 3 may be interpreted as follows: Process of the real time payment at banks level are shown, in particular upon receiving from the network validation of the balance, at the level of the sender's bank, the sender's account is debited in favor of the operator's account in the same bank, in parallel and at the recipient bank's level, the operator's account is debited and the recipient account is credited. In this entire process is triggered when each concerned party enters its own unique bank code (GTI).

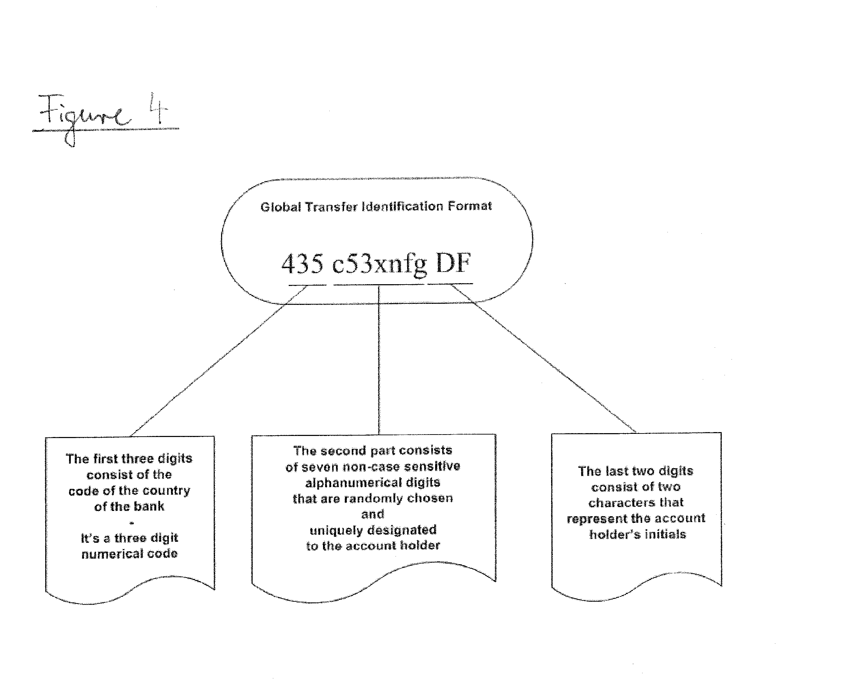

According to an embodiment of the present invention Figure 4 may be interpreted as follows: It shows a possible algorithm used to generate GTIs. For obvious security reasons only the structure of the GTI is shown in this picture. In this embodiment, the GTI is structured in the following manner: The GTI is an alphanumeric combination composed of 12 diGTIs computer generated and applying the following rule: (i) The first three diGTIs consist of a numerical sequence designating the bank's country code, (ii) the following and the subsequent 7 diGTIs represent a non-case sensitive alphanumerical sequence that are randomly generated and individually assigned to the account holder, (iii) the last two diGTIs consist of the GTI holder's initials.

According to one embodiment of the present invention, the sender may trigger a real time payment from a computer, the sender's own computer or any similar device capable of providing connectivity to a network. The transfer order is sent through the operator to the sender's bank to validate the sender's account balance, and if the funds are available, then the sender's bank will in turn send a real time validation from its own servers, and thereafter the operator sends the approval to the recipient bank to trigger the operation, once the recipient introduces its own GTI.

This GTI aims to replace in common banking operations the need for transfers using the SWIFT. The GTI is beyond "the traditional bank account number". A GTI can be regarded as an identity. Further to its use to make the transaction, it can be used to get determined information about the account, about the last transactions, the funds and so forth and through one single GTI, one may operate and manage a multitude of bank accounts.

In many countries, for example, the united states of America, the Social Security number could be used instead as GTI number. Somehow the GTI can represent the social security number in case of its absence (many countries do not have social security number).

According to an embodiment of the present invention Figure 2 may be interpreted as follows: It shows the establishment of a complex network solution that combines the use of private network and the internet. Indeed a sender may use the internet to log in to a private network by introducing his GTI. The operator will create a complex web of network connections between the operator server and various member banks with high security levels which cannot be disclosed for obvious security reasons. The data stored on the operator's server may be highly encrypted and remains confidential and may be accessible only by persons having taken an oath to respect bank secrecy. The security standard that is established at the operator level, may be not less than the standard adopted in the banks. In fact, the operator company which would be incorporated is most likely to be supervised, and partially owned by banks.

According to an embodiment of the present invention, Figure 4 may be interpreted as follows: It shows the structure of the GTI. The GTI may be generated via a software specially developed around the algorithm described in Figure 4. This software may randomly generate a GTI that will remitted to its owner without human intervention, hence only the recipient and the validation software will be able to know the complete information relating to the GTI. That is, each and every single information related to the GTI may not be delivered or divulgated to any person, other than its own owner.

According to an embodiment of the present invention, Figures 1 and 3 may be interpreted as follows: They show that at the level of the sender's bank and the recipient's bank there will be a series of transactions taking place either simultaneously or subsequent to the realization of an event that would trigger a subsequent event.
At the level of the sender's bank, first, upon receipt of a payment request, the operator shall send a validation request to the sender's bank, the sender's bank's servers shall process the validation request and trigger a real time process, i.e. irrespective of the sender's bank normal working hours an automated response concerning the accounts situation. If the amounts are sufficient, the sender's bank's server will inform the operator of the funds availability, the operator will then process the transaction in the manner contemplated below. In order for this operation to be successful, it may be ensured that the sender's and recipient's bank database are fully computerized, that all transactions are recorded in real time, that the validation tool contains all necessary variables to allow validation in real time, and that the operator servers have the proper authorization to read and write data (from and to the bank servers). In the event that the sender's bank rejects the validation, the transaction shall be cancelled, and the initiator (sender) will be automatically informed about that fact.

Once the transaction is contemplated, the operation server shall issue the debiting/crediting request and the sender's bank server will execute upon receipt of such instruction a cash withdrawal operation from his own client and credit the operator's account subsequently.

At the level of the recipient bank, upon receipt of the recipient's acceptance, the recipient's bank will execute in real time the transfer order and will subsequently credit the recipient's bank account with the relevant sum by debiting the operator's account.

At the operator's level, Figure 3 shows the operator's involvement and role throughout the entire process. The operator may create the back bone structure that will allow the various transactions to take place in a string of subsequent operations in a secure environment. Hence, the operator may ensure that access to the banks via the networks is made only after a PIN validation. This PIN validation may comprise the step of entering a PIN by the sender. The entered PIN may be transmitted from the sender to the operator together with the payment transaction request. Alternatively, the PIN may be sent from the sender to the operator before transmitting the payment transaction request. The transmitted PIN, which is assigned to the GTI of the sender, is approved by the operator. If the PIN sent by the sender corresponds to the PIN assigned to the GTI of the sender, the PIN validation process is determined to be successful. The operator may further ensure that that the operator database is available real time for immediate validation of the PIN and other processes needed to carry out the money transactions. In particular, the operator database should be fast enough to process instructions received from/sent to the banks in realtime, and to notify the sender and the recipient about the status of the money transaction in real time. The operator may be split into a main operator and several subsidiary operators which may be located in different locations/countries and connected to the main operator by respective networks.

As has become apparent, this invention touches in particular banking and retail systems by means of accelerating the internal processing of payments between a sender and a recipient on one hand and in between banks on the other hand.

The embodiments of the invention may be applied to online payment, unique bank code generation algorithms, and the like.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A method for electronic payment transactions, comprising:
- transmitting a payment transaction request to an operator, the payment transaction request comprising instructions to transfer an amount of money from a first bank account in a first bank to a second bank account in a second bank,
- transmitting a first payment request from the operator to the first bank instructing the first bank to transfer money from the first bank account to a first operator bank account in the first bank, and
- transmitting a second payment request from the operator to the second bank instructing the second bank to transfer money from a second operator bank account in the second bank to the second bank account.

2. The method according to claim
further comprising:
- transmitting a first confirmation request from the operator to the first bank, the first confirmation request requesting the first bank for confirmation that it is possible to debit the first bank account with the amount of money according to the payment request,
and
- transmitting a first confirmation message from the first bank to the operator if the first confirmation request can be met,
- wherein the operator only transmits the first payment request and the second payment request if the operator receives the first confirmation message.

3. The method according to claim 1 or 2,
further comprising:
- transmitting a second confirmation request from the operator to the second bank, the second confirmation request requesting the second bank for confirmation that it is possible to credit the second bank account with the amount of money according to the payment request, and
- transmitting a second confirmation message from the second bank to the operator if the second confirmation request can be met,
- wherein the operator only transmits the first payment request and the second payment request if the operator receives the second confirmation message.

4. The method according to any one of the claims 1 to 3,
wherein the operator is located outside the first bank and the second bank.

5. The method according to any one of the claims 1 to 4,
wherein all transmission steps are carried out in real time.

6. The method according to any one of the claims 1 to 5,
wherein the first payment request and the second payment request are transmitted to the first bank and the second bank simultaneously.

7. The method according to any one of the claims 1 to 6,
further comprising transmitting a payment completion message from the operator to an owner of the first bank account once the payment according to the payment transaction request has been successfully completed.

8. The method according to any one of the claims 1 to 7,
further comprising transmitting a payment completion message from the operator to an owner of the second bank account once the payment according to the payment transactionrequest has been successfully completed.

9. The method according to any one of the claims 1 to 8,
wherein, before transmitting the payment transaction request to the operator, a first unique identification number is generated and assigned to the owner of the first bank account and the first bank account, and a second unique identification number is generated and assigned to the owner of the second bank account and the second bank account.

10. The method according to claim 9,
wherein the payment transaction request includes the first unique identification number and the second unique identification number, wherein the first confirmation request as well as the first payment request includes the first unique identification number, and wherein the second confirmation request as well as the second payment request includes the second unique identification number.

11. The method according to any one of the claims 1 to 8,
wherein, before transmitting the payment transaction request to the operator, a first unique identification number is generated, wherein a first plurality of bank accounts including the first bank account as well as an owner of the first plurality of bank accounts are assigned to the first unique identification number, and wherein before transmitting the payment transaction request to the operator, a second unique identification number is generated, wherein a second plurality of bank accounts including the second bank account as well as an owner of the second plurality of bank accounts are assigned to the second unique identification number.

12. The method according to claim 11,
wherein the first bank account is selected according to a first priority list from the first plurality of bank accounts, and wherein the second bank account is selected according to a second priority list from the second plurality of bank accounts.

13. The method according to claim 12,
wherein the first bank account is replaced by at least one bank account from the first plurality of bank accounts according to the first priority list if the payment transaction cannot be completed using the first bank account, and wherein the second bank account is replaced by at least one bank account from the second plurality of bank accounts according to the second priority list if the payment transaction cannot be completed using the second bank account.

14. The method according to any one of the claims 9 to 13,
wherein the generation of a unique identification number and the corresponding assignment process are carried out on a random basis.

15. The method according to any one of the claims 9 to 14,
wherein each identification number respectively comprises information about the bank in which the corresponding bank account is located, and information about the owner of this bank account.

16. A system for electronic payment transactions, comprising:
- a first communication device,
- an operator device being connected to the first communication device via a first communication network,
- a second communication device being located within a first bank and being connected to the operator via a second network, and
- a third communication device being located within a second bank and being connected to the operator via a third network,
- wherein the first communication device is configured to transmit a payment request to the operator, the payment request comprising instructions to transfer an amount of money from a first bank account in the first bank to a second bank account in the second bank,
- wherein the operator is configured to a) transmit a first payment request from the operator to the second communication device instructing the first bank to transfer money from the first bank account to a first operator bank account in the first bank, and b) transmit a second payment request from the operator to the third communication device instructing the second bank to transfer money from a second operator bank account in the second bank to the second bank account.

## Amended claims

### Amended claims in accordance with Rule 137(2) EPC.

**1.** A method for electronic payment transactions, comprising:
- transmitting a payment transaction request to an operator, the payment transaction request comprising instructions to transfer an amount of money from a first bank account in a first bank to a second bank account in a second bank,
**characterized by**
- transmitting a first payment request from the operator to the first bank instructing the first bank to transfer money from the first bank account to a first operator bank account in the first bank, and
- transmitting a second payment request from the operator to the second bank instructing the second bank to transfer money from a second operator bank account in the second bank to the second bank account.
